# EUROPEAN PATENT APPLICATION

(11) **EP 2 077 424 A2**
(43) Date of publication of application: **08.07.2009**
(21) Application number: 09150059.5
(22) Date of filing: 05.01.2009
(51) Int. Cl.: F24F 3/14

(54) **Low power consumption dehumidifier unit**

(30) Priority: 04.01.2008 IT BO20080007
(71) Applicant: RHOSS S.p.A., 45031 Arqua' Polesine (IT)
(72) Inventor: Zen, Alessandro, 45100 Rovigo (IT); Vio, Michele, 30131 Venezia (IT)
(74) Representative: Jorio, Paolo

(57) **Abstract**

A dehumidifier unit (1, 20) comprising an inlet aperture (2) for the air to be dehumidified, an outlet aperture (3) for the dehumidified air, a fan (4) to draw in the air from an environment (A) and guarantee the passage of the air through the apertures (2, 3), a dehumidifying element (5, 22) connected to a hydraulic circuit (6), and two heat exchangers (8, 9) arranged respectively upstream and downstream of the dehumidifying element (5, 22) with respect to the direction of the airflow. The heat exchangers (8, 9) are connected to one another by means of a separate hydraulic circuit (10) comprising a pump (11).

## Description

The present invention relates to a low power consumption dehumidifier unit.

Air dehumidifiers are used for winter air-conditioning (for example swimming-pools) and for summer air-conditioning (for example radiant floor panel systems). In winter air-conditioning, unlike summer air-conditioning, the air discharged by the dehumidifier must be warmer than the air entering it, with the consequence that dehumidifiers used for winter air-conditioning have some structural differences compared to those used for summer air-conditioning.

More specifically, the dehumidifiers used for winter air-conditioning comprise a cooling circuit consisting of an evaporator, a compressor, a condenser, an expansion device and an external heat-discharging condenser. The air to be conditioned, drawn in from the environment, flows first through the evaporator where it is dehumidified and cooled, and then through the condenser in which it is heated. As is known in the prior art, in all cooling circuits the heat transferred by the condenser is equal to the sum of that removed by the evaporator and the mechanical work of the compressor, i.e. the energy absorbed by the compressor. In some applications the temperature of the air leaving the condenser is too high with respect to the desired heat rating, in which case an external heat-discharging is used to transfer the excess heat to an external source. For example, in swimming-pool dehumidifiers the excess heat can be discharged by a condenser connected to the system used to heat the water of the swimming-pool.

The dehumidifiers used for summer air-conditioning with a cooling circuit are particularly used in radiant element systems.

The summer air-conditioning systems with radiant elements work by exploiting heat exchange by radiation. A large portion of the environment (the floor, the ceiling, one or more walls) is cooled in summer to a temperature below the ambient air temperature. If this surface becomes too cold with respect to the thermo-hygrometric conditions of the environment, i.e. if its temperature is below the air dew point, undesirable condensation forms. Controlling the humidity of the ambient air is therefore extremely important in order to make sure that the dew point temperature is higher than the temperature of the radiant surface.

To dehumidify the air it must be cooled using a heat exchanger coil to below the dew point and then post-heated to a higher temperature.

The solution generally used by radiant system manufacturers envisages the insertion of an air dehumidifier comprising a direct expansion cooling cycle between two heat exchanger coils arranged upstream and downstream, supplied with the same water that supplies the radiant panels. The cooling circuit comprises an evaporator, a compressor, a condenser and an expansion device.

In the dehumidifier the air that is drawn undergoes a first cooling process by a first heat exchanger coil, then flows into the evaporator where it is cooled and dehumidified. Next, the air flows through the condenser, which transfers the same thermal power removed by the evaporator plus the entire mechanical work of the compressor. The air is discharged from the condenser at a higher temperature than the ambient temperature and must therefore be cooled by the second heat exchanger coil until it reaches ambient temperature or less.

The dehumidifiers of the type described above have a number of drawbacks, the main disadvantage concerning the lack of efficiency in terms of power consumption. In winter air-conditioning the air is cooled and then subsequently heated, while in summer air-conditioning the air is first heated and then subsequently cooled.

A further disadvantage consists of the need for a sealed cooling circuit, involving the use of coolant gases, which are known to be environmentally harmful, and also the need for routine and extraordinary maintenance.

Moreover, the presence of the compressor makes the dehumidifier bulky and heavy, and generates noise levels that are not compatible with more acoustically delicate environments, such as a bedroom, for instance.

Lastly, in summer air-conditioning the presence of four coils requires a high power output of the fan and thus a significant increase in power consumption.

The purpose of the present invention is to produce a dehumidifier unit for summer and winter air-conditioning, with technical characteristics such as to overcome the drawbacks of the prior art.

The object of the present invention is a dehumidifier unit comprising an inlet aperture for the air to be dehumidified, an outlet aperture for the dehumidified air, a fan to draw in the air from an environment and guarantee the passage of the air through the apertures; said dehumidifier unit being **characterized in that** it comprises a dehumidifying element connected to a hydraulic circuit, and two heat exchangers arranged respectively upstream and downstream of said dehumidifying element with respect to the direction of the airflow; said heat exchangers being connected to one another by means of a separate hydraulic circuit comprising a pump.

In order to better understand the present invention, a non-limiting preferred embodiment thereof will now be described by way of example with the help of the figures in the accompanying drawing, in which:
figure 1 is a schematic view of a first embodiment of the dehumidifier unit according to the present invention; and
figure 2 is a schematic diagram of a second embodiment of the dehumidifier unit according to the present invention.

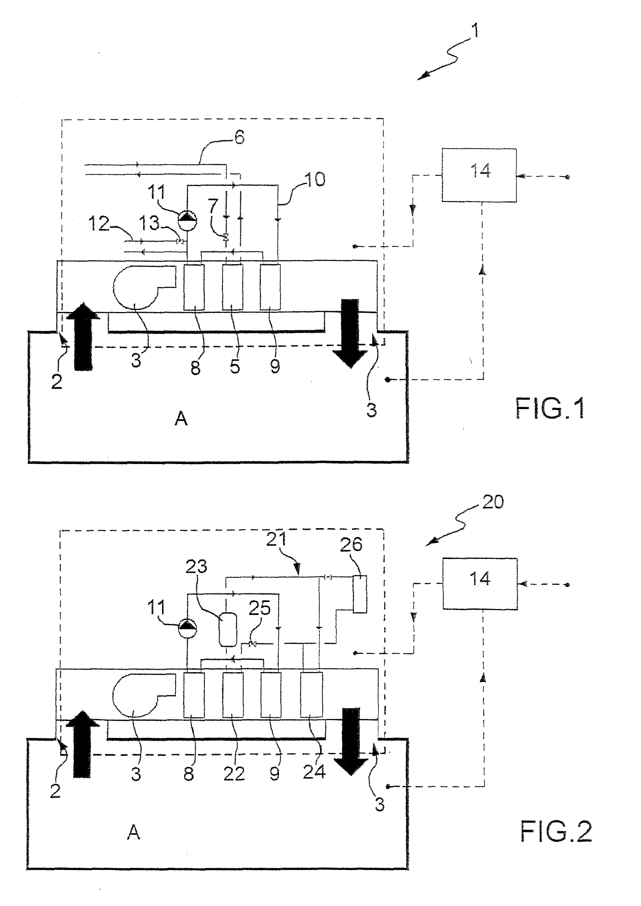

In figure 1 designated as a whole by number 1 is a dehumidifier unit according to a preferred embodiment of the present invention.

The dehumidifier unit 1 comprises an inlet aperture 2 for the air to be dehumidified, an outlet aperture 3 for the dehumidified air and a fan 4 to draw in the air from an environment A and guarantee the passage of the air through the apertures 2 and 3.

The dehumidifier unit 1 comprises a dehumidifying element 5 connected to a hydraulic circuit 6 for producing the cold water on which a valve 7 acts.

The dehumidifier unit 1 comprises two heat exchangers 8 and 9 arranged respectively upstream and downstream of the dehumidifying element 5 with respect to the direction of the airflow. The heat exchangers 8 and 9 are connected to one another by means of a separate hydraulic circuit 10, comprising a pump 11 and connected to an integration circuit 12 by means of an integration valve 13.

The heat exchangers 8 and 9 exchange heat between one another, in that the heat exchanger 8 takes heat from the air drawn in from the environment A and transfers it to the heat exchanger 9 via the water moved by the pump 11. The flow rate of the pump 11 can be controlled either by directly adjusting the speed of the pump or using any other control device.

The dehumidifier unit 1 comprises a central command and control unit 14 that controls the fan 4, the pump 11, and the control valves 7 and 13 after comparing the environment and external parameters, using specifically defined algorithms.

The fan 4 draws in the air from the environment A and the air flows through the heat exchanger 8 where it is cooled, and then flows through the dehumidifying element 5 where it is dehumidified and cooled again. Lastly it flows through the heat exchanger 9 where it is heated.

The extent of the heating by the heat exchanger 9 varies according to whether the dehumidifier unit 1 is used in winter or summer conditions. If the dehumidifier unit 1 is used in winter air-conditioning conditions, the heating is due partly to the heat removed by the heat exchanger 8 and partly to the heat coming from the warm water in the integration circuit 12 and controlled by the integration valve 13. It will be apparent to the person skilled in the art that the heating due to the heat removed by the heat exchanger 8 and transmitted via the hydraulic circuit 10 requires no work and is thus energetically "free".

If the dehumidifier unit 1 is used for summer air-conditioning, the heating is due exclusively to the heat removed by the heat exchanger 8 and, thus, for the reasons described above, completely energetically "free".

The integration valve 13 is used if further heating of the air is necessary. Said valve draws in warm water from a warm circuit, for instance the circuit for recovering heat from the condensation or from the desuperheating of a cooling unit that supplies the dehumidifying element 5.

Alternatively, the air temperature can be integrated using other systems, such as electric heating elements arranged in series with respect to the heat exchanger 9.

In figure 2 designated as a whole with number 20 is a second embodiment of the dehumidifier unit according to the present invention, in which the parts that are the same as those of the dehumidifier unit 1 are designed by the same numbers and are not described again.

The dehumidifier unit 20 differs from the dehumidifier unit 1 due to the presence of a cooling circuit 21 comprising an evaporator 22, which in this case acts as a dehumidifying element. As illustrated in figure 2, the cooling circuit 21 comprises a compressor 23, a condenser 24, an expansion device 25 and an external discharging condenser 26.

The condenser 24 is arranged downstream of the heat exchanger 9 and guarantees further heating of the air in winter air-conditioning conditions. As shown in figure 2, in the dehumidifier unit 20 the heat exchangers 8 and 9 are not connected to a dedicated integration circuit because, as already stated, the additional heating is performed by the condenser 24 of the cooling circuit 21.

From the above description it will be apparent to the person skilled in the art that the dehumidifier unit according to the present invention enables considerable energy savings to be achieved with respect to the prior art.

Another advantage lies in the possibility of not including a cooling unit, which eliminates the need for coolants such as greenhouse gases, reduces maintenance to a minimum and makes the unit light, compact and silent.

Moreover, the dehumidifier unit according to the present invention only has three coils, compared to four in the conventional system, which results in extremely limited fan power consumption.

Lastly, the dehumidifier unit can be used not only to support radiant air-conditioning, but also as an alternative, especially when bringing the environment to the required conditions. If the pump 11 is deactivated, the air can be introduced into the environment at a temperature low enough so that the entire system can very quickly be adjusted to the requirements of the environment.

## Claims

1. Dehumidifier unit (1, 20) comprising an inlet aperture (2) for the air to be dehumidified, an outlet aperture (3) for the dehumidified air, a fan (4) to draw in the air from an environment (A) and guarantee the passage of the air through the apertures (2, 3); said dehumidifier unit (1, 20) being **characterized in that** it comprises a dehumidifying element (5, 22) connected to a hydraulic circuit (6), and two heat exchangers (8, 9) arranged respectively upstream and downstream of said dehumidifying element (5, 22) with respect to the direction of the airflow; said heat exchangers (8, 9) being connected to one another by means of a separate hydraulic circuit (10) comprising a pump (11).

2. Dehumidifier unit (1) according to claim 1, **characterized in that** said separate circuit is connected to an integration circuit (12) suitable to supply warm water.

3. Dehumidifier unit (20) according to claim 1, **characterized in that** said dehumidifying element is an evaporator (22) of a cooling circuit (21).

4. Dehumidifier unit (20) according to claim 3, **characterized in that** a compressor (23) of said cooling circuit (21) is arranged downstream of said heat exchanger (9).

5. Dehumidifier unit (1, 20) according to any one of the previous claims, **characterized in that** it comprises a central command and control unit (14) which controls the fan (4), the pump (11) and the control valves (7, 13) after comparing the environment and external parameters.
